# EUROPÄISCHE PATENTSCHRIFT

(11) **EP 2 072 989 B1**
(45) Veröffentlichungstag und Bekanntmachung des Hinweises auf die Patenterteilung: **26.10.2011**
(21) Anmeldenummer: 07024781.2
(22) Anmeldetag: 20.12.2007
(51) Int. Cl.: G01M 3/28, F16K 37/00, G01M 3/18

(54) **Rohrleitung für Flüssigkeiten mit einer Dichtklappe**
Conduit for fluids with a seal valve
Conduite pour liquides dotée d'une soupape à clapet

(43) Veröffentlichungstag der Anmeldung: 24.06.2009
(73) Patentinhaber: Carl Freudenberg KG, 69469 Weinheim (DE)
(72) Erfinder: Röhner, Gerhard, 69502 Hemsbach (DE); Kunkel, Anja, 69483 Wald-Michelbach (DE)

(56) Entgegenhaltungen:
- EP-A- 0 199 055
- EP-A- 1 813 842
- DE-T2- 60 311 939
- FR-A- 1 213 532
- FR-A- 2 174 887
- US-A- 3 789 297
- US-A- 5 113 901
- US-A- 5 599 003
- US-A1- 2004 250 861

## Beschreibung

### Technisches Gebiet

In Rohrleitungen werden sehr häufig Dichtklappen eingesetzt, welche zur Absperrung der die Rohrleitung durchfließenden Flüssigkeiten dienen. Eine solche Rohrleitung ist aus EP 1 813 842 bekannt. Dabei werden die Dichtklappen für unterschiedliche Zwecke eingesetzt. So liegen auch Anwendungsfälle vor, bei denen durch die Dichtklappe eine absolute Absperrung erreicht werden soll und jegliche Leckage störend ist. Dieses System ist insbesondere bei Rohrleitungen der Fall, welche Reinigungsflüssigkeiten führen, was beispielsweise bei der Verarbeitung von Lebensmitteln der Fall ist, bei denen zur Reinigung Reinigungssäuren oder auch Reinigungslaugen zum Einsatz gelangen. Nach Abschließen der Rohrleitung durch die Dichtklappe soll mit größter Sicherheit ein Austreten der Reinigungsflüssigkeiten verhindert werden. Um eine eventuelle Verschmutzung der Lebensmittel zu verhindern, ist eine Überprüfung der Dichtheit der Dichtklappe sehr wünschenswert. Es besteht deshalb der Wunsch nach einer Möglichkeit zur Überwachung der Dichtheit der Dichtklappe. Die Möglichkeit einer Überwachung der Dichtheit einer Dichtung eines Ventils durch eine isolierte ringförmige Elektrode ist aus FR 2 174 887 bekannt.

### Darstellung der Erfindung

Der Erfindung liegt die Aufgabe zu Grunde, eine Einrichtung zu schaffen, bei der die Dichtheit der Dichtklappe jederzeit ohne aufwendige Montage oder dergl. feststellbar ist.

Die Lösung der gestellten Aufgabe wird mit den Merkmalen des Anspruchs 1 erreicht. Die Unteransprüche 2 und 3 stellen vorteilhafte Weiterbildungen des Erfindungsgegenstandes dar.

Gemäß der Erfindung ist bei einer Rohrleitung mit einer Dichtklappe in Strömungsrichtung nach der Dichtklappe in der Wand der Rohrleitung eine Elektrode vorgesehen, mit der eine Leckage bei geschlossener Dichtklappe feststellbar ist. Bei Auftreten einer Leckage wird zwischen der Elektrode und dem Dichtklappengehäuse bzw. der Rohrleitung eine leitende Verbindung hergestellt. Dabei wird in die Verbindung eine Widerstandsmessung eingesetzt, welche an eine elektronische Auswerteeinheit mit einer Leckageanzeige angeschlossen ist. Auf der Anzeige kann abgelesen werden, ob eine Leckage vorhanden ist.

Die Auswerteeinheit selbst ist an eine Stellungsanzeige der Dichtklappe angeschlossen, mit der sichergestellt wird, dass die Widerstandsmessung nur bei geschlossener Dichtklappe stattfindet. Bei offener Dichtklappe und durchfließender Flüssigkeit findet kein Messvorgang statt. Die Auswerteeinheit ist microprozessorgesteuert und wertet während des Messvorgangs den Widerstandswert zwischen der Elektrode und dem Dichtktappengehäuse bzw. der Rohrleitung aus.

Bevorzugt wird die Elektrode in dem Gehäuse für die Dichtklappe untergebracht. Dabei wird die Elektrode von einem isolator umgeben. Das Gehäuse für die Dichtklappe wird in der Regel durch zwei Flansche mit den Rohrenden, zwischen denen die Dichtklappe eingesetzt wird, verbunden. Dabei kann einer der Flansche direkt am Gehäuse angebracht sein. Es ist von Vorteil, wenn die Elektrode in einer Ringnut in dem Flansch des Gehäuses untergebracht wird. Dabei wird die Elektrode so eingefügt in die Nut, dass sie ebenfalls in Ringform das Rohrinnere umfasst und somit von der Leckageflüssigkeit im Leckagefall überdeckt werden kann. Es ist besonders vorteilhaft, wenn die Dichtklappe mitsamt der Elektrode in einer vertikal ausgerichteten Rohrleitung untergebracht ist.

### Kurzbeschreibung der Zeichnung

Anhand eines in der Zeichnung dargestellten Ausführungsbeispiels wird die Erfindung nachstehend erläutert.
Es zeigt:
- Fig. 1: schematisch einen Rohrabschnitt mit geöffneter Dichtklappe und
- Fig. 2: den Rohrabschnitt nach Fig. 1 mit geschlossener Dichtklappe.

### Ausführung der Erfindung

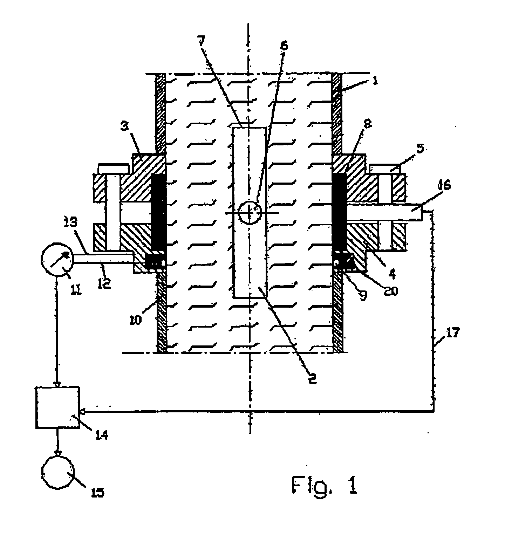

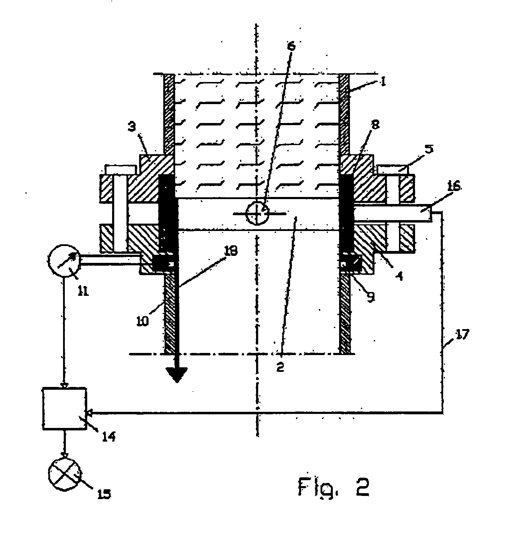

Bei der in den Fig. 1 und 2 gezeigten Einrichtung ist in die Rohrleitung 1 die Dichtklappe 2 eingesetzt. Über die Flansche 3 und 4 sind die beiden Rohrenden miteinander verbunden. Dabei ist der Flansch 3 an das auf der Zeichnung gesehen obere Rohrende angeschlossen, während der Flansch 4 an das auf der Zeichnung gesehen untere Rohrende angeschlossen ist. Durch die Schrauben 5 werden die Flansche 3 und 4 zusammengehalten. Innerhalb der Rohrleitung 1 befindet sich die Dichtklappe 2, welche um die Achse 6 drehbar ist und die mit ihrem äußeren Rand 7 in geschlossener Stellung nach der Fig. 2 an der Klappendichtung 8 anliegt. In Strömungsrichtung gesehen, nach der Dichtklappe 2, ist im vorliegenden Beispiel im Flansch 4 des nicht näher gezeigten Dichtkiappengehäuses die Elektrode 9 untergebracht, diese Elektrode kann auch in der Wand 10 der Rohrleitung 1 eingesetzt werden. Die Unterbringung im Flansch 4 des Dichtklappengehäuses ist jedoch fertigungstechnisch einfacher. Zur Unterbringung der Elektrode 9 ist im Flansch 4 eine Ringnut vorhanden, in welche die Elektrode 9, zusammen mit einer dieselbe von drei Seiten her umgebenden Isolierung 20 untergebracht. Die Elektrode 9 ist mit der Widerstandsmessung 11 verbunden, die als Brückenschaltung zwischen der Elektrode 9 und dem Flansch 3 eingesetzt ist. Hierfür ist die Widerstandsmessung 11 über die Leitung 12 mit der Elektrode 9 und über die Leitung 13 mit dem Flansch 3 verbunden. Die Widerstandsmessung 11 selbst ist an eine elektronische Auswerteeinheit 14 angeschlossen, die ihrerseits die Leckageanzeige 15 hat. Des Weiteren ist die Auswerteeinheit 14 mit dem Sensor 16 verbunden, welcher die Stellung der Dichtklappe 2 anzeigt. Nur bei geschlossener Dichtklappe nach Fig. 2 übermittelt der Sensor 16 über die Leitung 17 ein Signal an die Auswerteeinheit 14 und eröffnet damit den Messvorgang für die Widerstandsmessung. Die Auswerteeinheit 14 wertet sodann den Widerstandswert zwischen der Elektrode 9 und dem Dichtklappengehäuse aus. Da sehr häufig unmittelbar nach der Absperrung der Rohrleitung 1 durch die Dichtklappe 2 die Elektrode 9 noch mit Feuchtigkeit überzogen sein kann, ist es günstig, wenn die Auswertung in der Auswerteeinheit 14 erst mit zeitlicher Verzögerung erfolgt. Besonders gute Ergebnisse ergibt die Überwachung einer möglichen Leckage 18, wenn die Rohrleitung 1, wie im Ausführungsbeispiel gezeigt, vertikal ausgerichtet ist.

## Patentansprüche

1. Rohrleitung für Flüssigkeiten mit einer Dichtklappe, **dadurch gekennzeichnet, dass** in Strömungsrichtung nach der Dichtklappe (2) in einer Ringnut in der Wand (10) der vertikal ausgerichteten Rohrleitung (1) bzw. eines Flansches (4) des Dichtklappengehäuses eine zur Rohrleitung (1) bzw. zum Flansch (4) hin isolierte in Ringform das Rohrinnere umfassende Elektrode (9) vorgesehen ist, die über eine Widerstandsmessung (11) als Brückenschaltung mit der Wand (10) der Rohrleitung bzw. dem Dichtklappengehäuse verbunden ist, wobei die Widerstandsmessung (11) an eine Auswerteeinheit (14) angeschlossen ist, die ihrerseits mit einer Stellungsanzeige (16) der Dichtklappe (2) verbunden ist, mit der eine Leckage bei geschlossener Dichtklappe (2) feststellbar ist, wobei die Auswertung mit einstellbarer zeitlicher Verzögerung erfolgt.

2. Rohrleitung nach Anspruch 1 **dadurch gekennzeichnet, dass** an die elektronische Auswerteeinheit (14) eine Leckageanzeige (15) angeschlossen ist.

3. Rohrleitung nach Anspruch 1 oder 2 **dadurch gekennzeichnet, dass** die Auswerteeinheit (14) microprozessorgesteuert den Widerstandswert zwischen der Elektrode (9) und dem Dichtklappengehäuse (4) auswertet.

## Claims

1. Pipeline for liquids comprising a sealing valve, **characterized in that** in the flow direction downstream of the sealing valve (2) there is provided, in an annular groove in the wall (10) of the vertically oriented pipeline (1) or of a flange (4) of the sealing valve housing, an electrode (9) which is insulated with respect to the pipeline (1) or the flange (4), encloses the inside of the pipe in an annular shape and is connected via a resistance meter (11) as bridge circuit to the wall (10) of the pipeline or to the sealing valve housing, wherein the resistance meter (11) is connected to an evaluation unit (14) which in turn is connected to a position indicator (16) of the sealing valve (2) by means of which, with the sealing valve (2) closed, a leakage can be detected, wherein the evaluation takes place with an adjustable time delay.

2. Pipeline according to Claim 1, **characterized in that** a leakage indicator (15) is connected to the electronic evaluation unit (14).

3. Pipeline according to Claim 1 or 2, **characterized in that** the evaluation unit (14), under microprocessor control, evaluates the resistance value between the electrode (9) and sealing valve housing (4).

## Revendications

1. Conduit tubulaire pour liquides, doté d'un clapet d'étanchéité,
**caractérisé en ce que**
une électrode (9), de forme annulaire, qui entoure l'intérieur du tube, isolée par rapport au conduit tubulaire (1) et par rapport à la bride (4) et reliée à la paroi (10) du conduit tubulaire et du boîtier du clapet d'étanchéité par l'intermédiaire d'un circuit en pont qui mesure (11) une résistance, est prévue en aval du clapet d'étanchéité (2) dans la direction d'écoulement, dans une rainure annulaire ménagée dans la paroi (10) du conduit tubulaire (1) orienté à la verticale ou d'une bride (4) du boîtier du clapet d'étanchéité, la mesure (11) de résistance étant raccordée à une unité d'évaluation (14) qui selle-même est reliée à un affichage (16) qui donne la position du clapet d'étanchéité (2) et qui permet de constater une fuite lorsque le clapet d'étanchéité (2) est fermé, l'évaluation s'effectuant à un retard temporel ajustable.

2. Conduit tubulaire selon la revendication 1, **caractérisé en ce qu'**un affichage (15) des fuites est raccordé à l'unité électronique d'évaluation (14).

3. Conduit tubulaire selon les revendications 1 ou 2, **caractérisé en ce que** l'unité d'évaluation (14) évalue sous la commande d'un microprocesseur la valeur de la résistance entre l'électrode (9) et le boîtier (4) du clapet d'étanchéité.
